## Europäisches Patentamt
## European Patent Office
## Office européen des brevets

(11) Veröffentlichungsnummer: **0 393 486 B1**

(12) # EUROPÄISCHE PATENTSCHRIFT

(45) Veröffentlichungstag der Patentschrift: **02.03.94**

(21) Anmeldenummer: **90106914.6**

(22) Anmeldetag: **11.04.90**

(51) Int. Cl.5: **H02K 1/16**, H02K 3/48, H02K 3/14, H02K 17/30, H02P 7/63

(54) **Elektrische Maschine, insbesondere Drehfeldmaschine, mit mehreren magnetisch gekoppelten, in Nuten angeordneten Wicklungsteilen.**

(30) Priorität: **18.04.89 DE 8904874 U**

(43) Veröffentlichungstag der Anmeldung:
**24.10.90 Patentblatt 90/43**

(45) Bekanntmachung des Hinweises auf die Patenterteilung:
**02.03.94 Patentblatt 94/09**

(84) Benannte Vertragsstaaten:
**CH DE FR GB IT LI SE**

(56) Entgegenhaltungen:
DE-A- 3 204 864      DE-A- 3 326 395
DE-A- 3 408 968      DE-C- 702 452
DE-U- 1 792 091      FR-A- 548 178

**PATENT ABSTRACTS OF JAPAN vol. 11, no. 306 (E-546)(2753) 06 Oktober 1987, & JP-A-62 100191**

(73) Patentinhaber: **SIEMENS AKTIENGESELL-SCHAFT**
**Wittelsbacherplatz 2**
**D-80333 München(DE)**

(72) Erfinder: **Auinger, Herbert, Dipl.-Ing., Dr., techn.**
**Karl Giermannstrasse 11**
**D-8500 Nürnberg 50(DE)**

## Beschreibung

Die Erfindung betrifft eine elektrische Maschine, insbesondere eine Drehfeldmaschine, gemäß dem Oberbegriff des Anspruches 1.

Umrichtergespeiste elektrische Drehfeldmaschinen werden verschiedentlich mit mehreren galvanisch getrennten Wicklungsteilen ausgeführt. Diese Wicklungsteile können dabei ein- oder mehrphasig sein. Sie sind entsprechend ihrer räumlichen Spulenverteilung in den Nuten eines gemeinsamen Blechpaketes magnetisch gekoppelt. Den einzelnen Wicklungsteilen bzw. -systemen ist i.a. ein gesonderter Stromrichter zugeordnet.

Eine derartige Wicklungsaufteilung wird insbesondere bei größeren Maschinen vorgenommen, z.B. zur Erreichung

- sehr hoher Gesamtleistungen durch Parallelbetrieb einer entsprechenden Zahl standardisierter Stromrichtermodule
- einer hohen Betriebssicherheit bzw. Redundanz; bei Störungen wird das fehlerhafte System abgeschaltet und der Antrieb bleibt bei entsprechend verminderter Leistung weiter betriebsfähig
- eines hohen Gleichförmigkeitsgrades des Antriebes, d.h. Vermeidung von Drehmoment- und Leistungspulsationen durch eine größere Zahl verschiedenphasiger Wicklungsteile, die stromrichterseitig entsprechend zeitversetzt getaktet werden.

Zur Reduzierung der bei U-Umrichtern durch die eingeprägten Spannungsoberschwingungen verursachten Oberschwingungsströme und -Zusatzverluste ist es bekannt, die Maschine mit vergrößerter Streureaktanz auszuführen. Aus der DE-PS 3 204 864, DE-OS 33 26 396, DE-OS 33 26 395 und DE-PS 34 08 968 sind verschiedene Lösungsmöglichkeiten hierzu bekannt.

Für Maschinen der eingangs genannten Art haben jedoch diese bekannten Maßnahmen den Nachteil, daß gleichzeitig mit der gewünschten Vergrößerung der insgesamt wirksamen Streureaktanz auch die magnetische Kopplung der einzelnen Wicklungsteile untereinander verstärkt wird. Da diese Wicklungsteile i.a. von verschiedenen Stromrichtermodulen gespeist werden, sind die daraus resultierenden gegenseitigen Rückwirkungen sehr störend.

Es ist daher eine Lösung zu finden, die diesen Nachteil vermeidet. Dies gelingt durch die Merkmale des Anspruchs.

Durch diese Maßnahmen wird für die unterhalb des Zwischenbereiches befindlichen Spulenseiten eine Erhöhung des magnetischen Leitwertes (Induktivität) für den Anteil der Nutstreuung erzielt, ohne daß eine störende Koppelung der oberhalb des Zwischenbereiches befindlichen Spulenseiten in Kauf genommen werden muß.

Durch das DE-U-17 92 091 und die DE-C-702 452 sind elektrische Maschinen mit Spulenanordnungen bekannt, bei denen zwischen den am Nutgrund befindlichen Spulenseiten eines Wicklungsteils und den darüber befindlichen Spulenseiten der übrigen Wicklungsteile ein streufeldvergrößernder, ferromagnetisches Material enthaltender Zwischenbereich angeordnet ist. Bei der durch das DE-U-17 92 091 bekannten Maschine dient die durch den Zwischenbereich abgetrennte Zusatzwicklung zur Speisung eines Motorlüfters, dagegen wird bei der durch die DE-C-702 452 bekannten Maschine durch entsprechendes Verschalten der durch das ferromagnetische Material getrennten Wicklungsteile mit den einzelnen Kommutatorlamellen eine Verbesserung der Kommutierung angestrebt.

Weitere bevorzugte Ausführungsformen der Erfindung sind in den Unteransprüchen angegeben und werden anhand von 7 Figuren erläutert. Es zeigen:

Figur 1
eine mit den Spulenseiten einer zweischichtigen Wicklung gefüllte Nut mit einem erfindungsgemäßen Zwischenschieber,

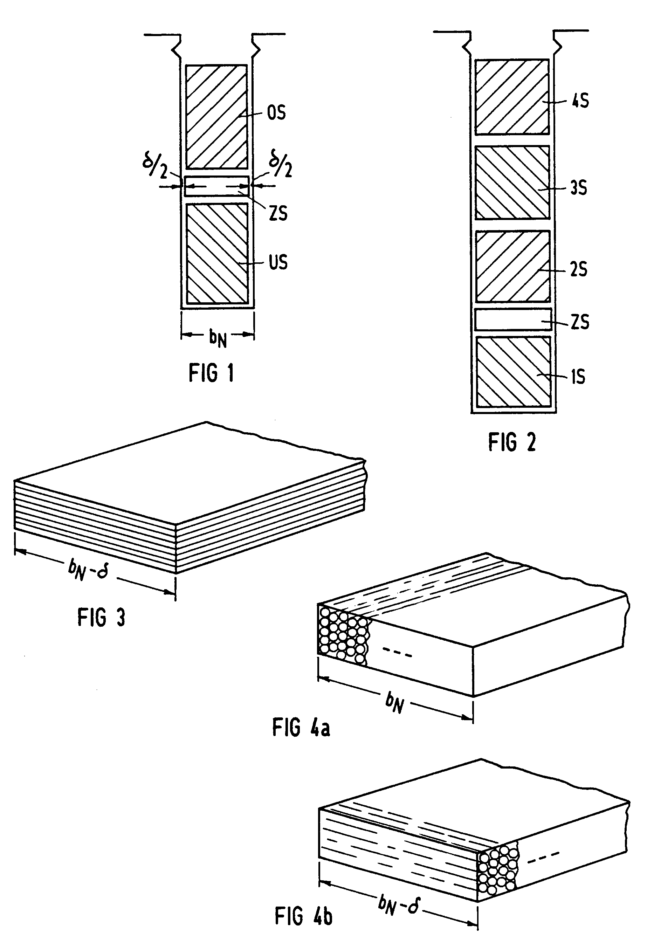

Figur 2
eine Abwandlung der Figur 1 für mehrere Wicklungsschichten,

Figur 3
einen geblechten Zwischenschieber,

Figur 4a, 4b
Zwischenschieber aus vergossenem ferromagnetischem Material,

Figur 5
die magnetische Wirkung eines zwischen Nutwand und ferromagnetischem Zwischenschieber vorgesehenen Luftspaltes,

Figur 6 und Figur 7
Nuten mit angeformten Streustegen.

Erfindungsgemäß sind bei mehrphasigen Wicklungen ferromagnetische Zwischenbereiche, z.B. in Form von Zwischenschiebern, in den Nuten angeordnet. Solche ferromagnetische Zwischenschieber ZS werden bei Zweischichtwicklungen in den Nuten der Breite $b_N$ zwischen den Unter- und Oberschichtspulenseiten (US und OS, Figur 1) bzw. bei mehrschichtigen Wicklungen zwischen der vom Nutgrund aus gezählten ersten Schicht 1S und der zweiten Schicht 2S (Figur 2) eingelegt. Falls die erste und zweite Schicht dem gleichen Wicklungsteil angehören, kann der Zwischenschieber ohne nachteilige Wirkung auf die magnetische Kopplung auch nach der zweiten Schicht angeordnet werden.

Für die konstruktive Ausbildung derartiger ferromagnetischer Zwischenschieber kommen neben allen in der DE-OS 33 26 396 ausführlich beschriebenen Möglichkeiten insbesondere auch

- eine Querblechung, z.B. aus Dynamoblechstreifen (Figur 3) oder
- in einem geeigneten Trägermaterial (z.B. Kunstharz) eingebettetes ferromagnetisches Material, z.B. Eisendrähte in Frage, wobei die Eisendrähte z.B. achsparallel, d.h. in Längsrichtung der Nut (Figur 4a) oder auch quer zur Nut orientiert sein können (Figur 4b).

Für parallelflankige Nuten gemäß den Figuren 1 und 2 sind von den in der DE-OS 33 26 396 erläuterten Maßnahmen vor allem diejenigen besonders geeignet, bei denen der Zwischenschieber bereits vor dem Einbringen in die Nut seine endgültige Form erhält. In allen Fällen muß auf einen festen Sitz innerhalb der Nut geachtet werden. Bei eingelegten Blechstreifen (Figur 3) oder quer liegenden Drähten (Figur 4b) ist ferner ein definierter seitlicher Abstand $\delta/2$ zur Nutwand hin einzuhalten, der zusammen mit der Querschnittsfläche des ferromagnetischen Zwischenschiebers den magnetischen Leitwert für die Vergrößerung der anteiligen Nutstreuinduktivität bestimmt.

Eine an einem konkreten Beispiel vorgenommene quantitative Überprüfung hat folgendes ergeben:
Fertigt man einen 2 mm dicken Zwischenschieber unter Einhaltung eines seitlichen Luftspaltes $\delta$ von insgesamt 0,75 mm aus ferromagnetischem Material, dann ergibt sich eine um 35 % erhöhte Nutstreuinduktivität. Die maximale Flußdichte im Streupfad erreicht dabei ca. 0,8 T und bleibt damit weit unterhalb der Sättigungsgrenze. Die hierdurch entstehenden Ummagnetisierungszusatzver luste bleiben damit auch bei oberster Betriebsfrequenz vernachlässigbar gering.

Durch einen um wenige mm dickeren Zwischenschieber, d.h. entsprechend vergrößerten Durchtrittsquerschnitt für den zusätzlichen, jeweils nur mit der untersten Spulenseite verketteten Nutstreufluß läßt sich die zusätzlich wirksame Streuinduktivität entsprechend vervielfachen. Bei einer im Bereich 5 bis 10 cm liegenden Nuttiefe hat dies nur unwesentliche Auswirkungen auf die Aktivteilabmessungen.

Durch den definierten "magnetisch wirksamen Luftspalt" $\delta$ zwischen Nutwand und ferromagnetischem Zwischenschieber ZS kann sichergestellt werden, daß die magnetische Flußdichte auch bei den maximal vorkommenden Strömen weit unterhalb der Sättigungsgrenze bleibt. Damit werden ein linearer Induktivitätsverlauf und vernachlässigbar niedrige Magnetisierungsverluste erzielt.

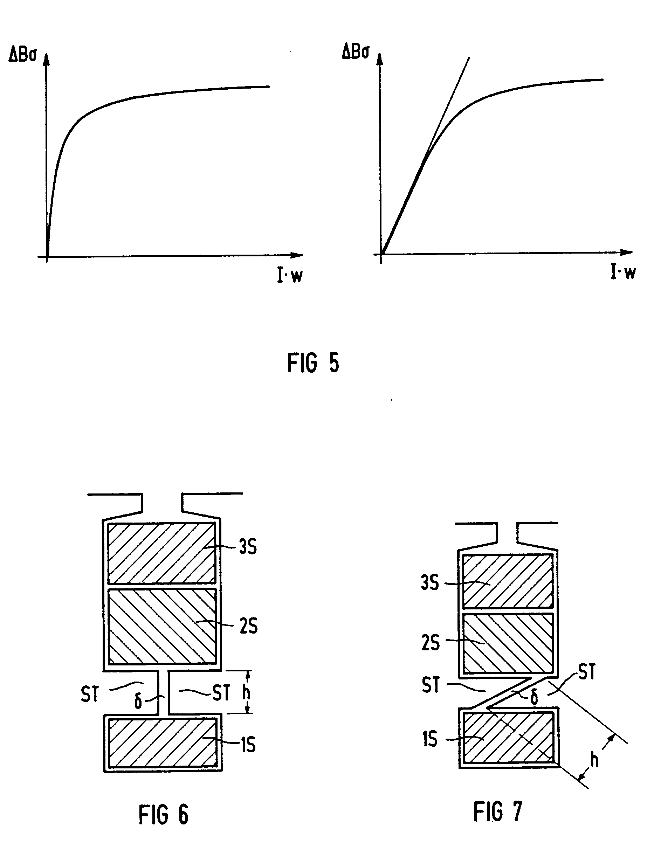

Zur Erläuterung ist in der linken Hälfte der Figur 5 die Flußdichte B des über den Zwischenschieber ZS verlaufenden Anteils $\Delta B_\sigma$ des Nutstreuflusses bei vorgegebener Durchflutung (Ständerstrom I x Windungszahl w der unterhalb des Zwischenschiebers befindlichen Spulenseiten) für eine Anordnung ohne magnetisch wirksamen Luftspalt $\delta$ dargestellt. Wie die rechte Hälfte der Figur 5 zeigt, wird durch den magnetisch wirksamen Luftspalt $\delta$ eine Linearisierung dieses Streuflußanteiles $\Delta B_\sigma$ erreicht.

Der magnetisch wirksame Luftspalt $\delta$ kann bei geblechten Ausführungen in Form diskreter Luftstrecken $\delta/2$ z.B. durch geeignete Abstandshalter (Füllstreifen, Kunstharz oder dergleichen) zwischen Nutwand und Zwischenschieber (Figur 1, 3 und 4b) gestaltet oder bei anderen Ausführungsformen als Summenwert aus dem Mischungsverhältnis von ferromagnetischem Strukturmaterial und Isolierstoff (Eisenfüllfaktor) resultieren (Figur 4a).

Bei Maschinen mit halbgeschlossenen Nuten, z.B. bei

- Stabwicklungen, deren Stäbe von der Stirnseite her axial in das Blechpaket eingeschoben werden,
- "Fädelwicklungen" aus Profil- oder Runddraht,
- "Träufelwicklungen" aus dünnen Runddrähten

können anstelle gesonderter ferromagnetischer Zwischenschieber auch Nutformen mit entsprechend gestalteten "Streustegen ST", ähnlich wie bei Läufernuten für Doppelstab-Käfigwicklungen, eingesetzt werden.

In diesem Fall können also die Streustege ST jeweils an die Nutwand angeformt sein. Sie bestehen dann aus dem gleichen Material wie der Ständer selbst und werden durch die entsprechende Formgebung der Nuten bei der Herstellung des Ständers geschaffen.

Derartige Ausführungsformen sind in Figur 6 und 7 gezeigt. Bei gleichem magnetischem Leitwert ($\Lambda \approx \frac{\delta}{h}$) des Luftspaltes $\delta$ läßt sich die radiale Erstreckung dieser angeformten Stege ST und damit die erforderliche Nuttiefe verringern, wenn der Luftspalt $\delta$ schräg verläuft, wie in Figur 7 dargestellt ist.

In jedem Fall wird für die unterhalb der Zwischenschieber ZS bzw. der Streustege ST befindlichen Wicklungsteile 1S ein Bereich mit erhöhtem magnetischem Leitwert gebildet, wohingegen in den darüber befindlichen Wicklungsteilen 2S, 3S keine unerwünschte Koppelung auftritt.

Selbstverständlich können derartige ferromagnetische Zwischenbereiche auch im Läufer einer läufergespeisten Maschine angeordnet sein. Ferner können solche auch bei Maschinen mit zusätzlich zur Hauptwicklung angeordneten Hilfswicklungen zur gezielten Vergrößerung der Streureaktanz der nutgrundseitigen Wicklungsteile eingesetzt werden.

## Patentansprüche

1. Elektrische Maschine, insbesondere Drehfeldmaschine, mit mehreren magnetisch gekoppelten in Nuten angeordneten Wicklungsteilen, die an einen spannungseinprägenden Umrichter angeschlossen sind, **dadurch gekennzeichnet,**
daß zur Reduzierung der vom Umrichter verursachten Oberschwingungsströme und Zusatzverluste die Spulenseiten der Wicklungsteile in übereinanderliegenden Schichten (1S, 2S, 3S, 4S) in den Nuten angeordnet sind und daß zwischen den am Nutgrund befindlichen Spulenseiten (Schicht 1S) eines Wicklungsteiles und den darüber befindlichen Spulenseiten (Schicht 2S, 3S, 4S) der übrigen Wicklungsteile ein streufeldvergrößernder, ferromagnetisches Material enthaltender Zwischenbereich (ZS bzw.ST) angeordnet ist.

2. Elektrische Maschine nach Anspruch 1, **dadurch gekennzeichnet,** daß im Zwischenbereich eingelegte Zwischenschieber (ZS) angeordnet sind.

3. Elektrische Maschine nach Anspruch 2, **dadurch gekennzeichnet,** daß die Zwischenschieber (ZS) aus ferromagnetischen Blechschichten bestehen (Fig. 3).

4. Elektrische Maschine nach Anspruch 2, **dadurch gekennzeichnet,** daß die Zwischenschieber (ZS) aus ferromagnetischen Körpern wie Ferrit- oder Eisendrähten oder Eisenteilchen bestehen, die in eine Vergußmasse, insbesondere einen elektrisch isolierenden Kunststoff, eingebettet sind.

5. Elektrische Maschine nach Anspruch 2, **dadurch gekennzeichnet,** daß die Zwischenschieber (ZS) durch Abstandshalter in einem einen definierten, magnetisch wirksamen Luftspalt ($\delta$ ) bildenden Abstand von der Nutwand gehalten sind.

6. Elektrische Maschine nach Anspruch 1, **dadurch gekennzeichnet,** daß der Zwischenbereich durch an der Nutwand angeformte, die Nutbreite ($b_N$) bis auf einen definierten Luftspalt ($\delta$ ) überbrückende Streustege (ST) gebildet sind (Fig. 6, 7).

7. Elektrische Maschine nach Anspruch 6, **dadurch gekennzeichnet,** daß der Luftspalt ($\delta$ ) schräg zur Nutmitte verläuft (Fig. 7).

## Claims

1. Electric machine, in particular a polyphase machine, having several winding sections which are magnetically coupled, are arranged in slots and are connected to a voltage-applying converter, characterised in that for the purpose of reducing the harmonic currents, produced by the converter, and additional losses, the coil sides of the winding sections are arranged in superimposed layers (1S, 2S, 3S, 4S) in the slots and in that arranged between the coil sides (layer 1S) of one winding section located at the slot base and the coil sides (layer 2S, 3S, 4S) of the other winding sections located above the latter there is a leakage field-increasing intermediate region (ZS or ST) which contains ferromagnetic material.

2. Electric machine according to claim 1, characterised in that inlaid separators (ZS) are arranged in the intermediate region.

3. Electric machine according to claim 2, characterised in that the separators (ZS) consist of ferromagnetic sheet layers (Figure 3).

4. Electric machine according to claim 2, characterised in that the separators (ZS) consist of ferromagnetic bodies, such as ferrite wires or iron wires or iron particles which are embedded in a casting compound, in particular an electrically insulating plastics material.

5. Electric machine according to claim 2, characterised in that the separators (ZS) are held by spacers at a distance from the slot wall forming a defined, magnetically effective air gap ($\delta$).

6. Electric machine according to claim 1, characterised in that the intermediate region are (sic) formed by leakage webs (ST) pre-formed on the slot wall and bridging over the slot width ($b_N$) with the exception of a defined air gap ($\delta$) (Figures 6, 7).

7. Electric machine according to claim 6, characterised in that the air gap ($\delta$) extends obliquely relative to the slot centre (Figure 7).

## Revendications

1. Machine électrique, notamment une machine à champ tournant, comportant plusieurs éléments d'enroulement couplés magnétiquement et disposés dans des encoches et qui sont raccordés à un convertisseur statique injectant une tension, caractérisée par le fait que pour réduire les courants harmoniques provoqués par le convertisseur statique, et des pertes supplémentaires, les côtés de la bobine des éléments d'enroulement sont disposés selon des couches superposées (1S, 2S, 3S, 4S) dans les encoches, et qu'entre les côtés (couche 1S), situés dans le fond de l'encoche, de la bobine d'un élément d'enroulement et les côtés (couche 2S, 3S, 4S), situés au-dessus des précédents, de la bobine des autres éléments d'enroulement, est située une zone intermédiaire (ZS ou ST) qui augmente le champ de fuite et contient un matériau ferromagnétique.

2. Machine électrique suivant la revendication 1, caractérisée par le fait qu'il est prévu des éléments intercalaires (ZS) insérés dans la zone intermédiaire.

3. Machine électrique suivant la revendication 2, caractérisée par le fait que les éléments intercalaires (ZS) sont constitués par des couches de tôles ferromagnétiques (figure 3).

4. Machine électrique suivant la revendication 2, caractérisée par le fait que les éléments intercalaires (ZS) sont constitués par des corps ferromagnétiques tels que des fils de ferrite ou de fer ou des particules de fer, qui sont insérés dans une masse de scellement, notamment une matière plastique électriquement isolante.

5. Machine électrique suivant la revendication 2, caractérisée par le fait que les éléments intercalaires (ZS) sont maintenus par des entretoises à une distance des parois des encoches, qui forme un entrefer défini actif magnétiquement ($\delta$).

6. Machine électrique suivant la revendication 1, caractérisée par le fait que la zone intermédiaire est formée par des barrettes de dispersion (ST) qui sont formées dans la paroi des encoches et s'étendent sur toute la largeur ($b_N$) des encoches, à l'exception d'un entrefer défini ($\delta$) (figures 6, 7).

7. Machine électrique suivant la revendication 6, caractérisée par le fait que l'entrefer ($\delta$) s'étend obliquement par rapport au centre de l'encoche (figure 7).

FIG 1

FIG 2

FIG 3

FIG 4a

FIG 4b

FIG 5

FIG 6

FIG 7